# EUROPEAN PATENT APPLICATION

(11) **EP 2 685 641 A1**
(43) Date of publication of application: **15.01.2014**
(21) Application number: 12175914.6
(22) Date of filing: 11.07.2012
(51) Int. Cl.: H04B 10/07

(54) **Optical amplification stage for otdr monitoring and related method and system for otdr monitoring of an optical communication link**

(71) Applicant: PADTEC S.A., 13086-902 Campinas-SP (BR)
(72) Inventor: Righetti, Aldo, 20161 Milano (IT); Grasso, Giorgio, 20900 MONZA (Monza Brianza) (IT); Meli, Fausto, 29121 PIACENZA (IT); Melloni, Andrea, 20129 MILANO (IT)
(74) Representative: Tirloni, Bartolomeo

(57) **Abstract**

Optical amplification stage (1) for OTDR monitoring, comprising a first (2a) and a second optical signal path (2b), a first (3a) and a second optical amplifier (3b), a first optical coupler (4a) placed along the first optical signal path downstream the first optical amplifier, a second optical coupler (4b) placed along the second optical signal path downstream the second optical amplifier, an optical by-pass path (5) optically connecting the first and the second optical coupler, a first (11a) and a second optical reflector (11b) optically connected to respectively the first and second optical coupler, the first and second reflector being structured for reflecting respectively in a first (30) and second reflection band (31) comprising respectively a first and a second OTDR wavelength and not comprising the WDM band, wherein a first total loss is defined as the loss through the by-pass path and a second total loss is defined as the sum of the first total loss and the reflection loss, the difference of the second total loss to the first total loss at the first and second OTDR wavelengths being less than 10 dB.

## Description

The present invention relates to the field of optical telecommunication, in particular it relates to an optical amplification stage for OTDR monitoring and related method and system for OTDR monitoring of an optical communication link, in particular a bi-directional, amplified, optical communication link.

Optical Time Domain Reflectometry (OTDR), and more particularly Coherent-OTDR (C-OTDR, e.g. having an OTDR signal based on a continuous wave shifted in frequency and received coherently), is a well known technique for monitoring optical communication link made up of optical fiber spans, in particular for monitoring amplified optical communication link wherein a number of optical amplifiers are cascaded along the optical communication link.

For example, in submarine optical communication systems which may span over thousands of kilometres (up to 8-10.000 km) without opto-electronic (O/E) conversion of the WDM signal thanks to a cascade of various tens of WDM amplifier regularly spaced, C-OTDR allows fast and accurate detection of optical link and/or optical amplifier failures.

OTDR relies on the well know principle of the back-scattering of an optical radiation propagating along an optical fiber by the material of the optical fiber itself. The optical power back-scattered is typically -30dB below the optical power forward-propagating for an OTDR pulse having center wavelength at around 1550 nm. Since the optical amplifiers allow propagation only in the direction of the WDM signal along an optical line (e.g. they typically include uni-directional optical isolator), it is needed to route the back-scattered OTDR radiation into a further optical line, co-spanning with the optical line under test, having opposite direction of propagation of the respective WDM signal. This task is usually accomplished by way of a by-pass path in correspondence of each optical amplifier.

The Applicant has noted that a general problem of the state of the art OTDR techniques is that, in particular for long optically amplified system (e.g over 2000 km without O/E conversion), due to the high loss of the C-OTDR bypass path, needed for avoiding interference between working channels propagating in opposite directions, it is necessary to launch OTDR signals with high power in order to monitor the integrity and the operation of the amplifiers. This in turns requires to perform the OTDR monitoring operations only out-of-service (i.e. with the WDM signal off), since otherwise the optical power in the OTDR signal would reduce the amplifier optical gain and then the dynamic range of the transmission system.

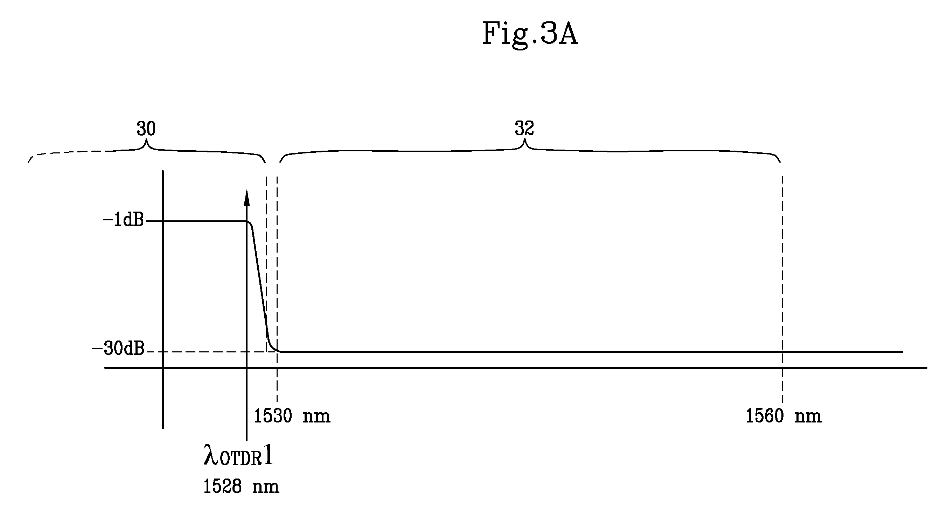

US2009/0324249 Al discloses various high loss loop back (HLLB) repeater architectures that enable selectively monitoring of Rayleigh signals from both inbound and outbound directions of an optical communication system. In one such embodiment (as shown in fig 3a of the cited document), the repeater includes an amplifier pair (amplifiers A and B), six optical couplers, and two wavelength selective filters each reflecting only the two test signal wavelengths from OTDR test equipment. A first HLLB path is provided for coupling the output of amplifier A to the input of amplifier B. A second HLLB path is provided for coupling the output of amplifier B to the input of amplifier A. A third HLLB path is provided for coupling the output of amplifier A to the output of amplifier B. When monitoring the incoming fiber, the two test signal wavelengths from OTDR equipment propagate through the first HLLB path and down the incoming fiber, and the corresponding reflected Rayleigh signal wavelengths from the incoming fiber are provided back to the OTDR test equipment for analysis. In addition to the Rayleigh signal it is also provided an HLLB test signal which is reflected by the filter along the first HLLB path and into port Y of coupler 6. This HLLB test signal is output at port A of coupler 6 and provided to the 10% port of coupler 2, and to the third HLLB path, and then back to OTDR equipment. This HLLB test signal can be used in a similar fashion as the OTDR test signals in diagnosing problems or potential problems associated with the HLLB architecture.

The Applicant has noted several disadvantages of the above described prior art repeater architecture. First, the total loss of the third HLLB path (which serves as a by-pass path) is only 20 dB, resulting in an acceptably high interference of the in-band back-scattered WDM signals coming from one optical line to the WDM signal of the other optical line, especially when a large number of optically amplified spans are cascaded together. Second, the coupler (coupler 6) placed along the first HLLB path introduces a total of more than about 10 dB attenuation (assuming no loss introduced by the filter 2) on the HLLB test signal in the double passage across the coupler 6 (from port A to Y and then, after reflection, from port Y to A). In order to compensate for such a 10 dB loss, one may think to decrease the total loss of the third HLLB path (with in turn a worsening of the interference problem highlighted above) and/or to increase the power of the OTDR signal launched (with in turn the need to monitor only out-of-service). Moreover, in a possible attempt to reduce the loss given by the coupler along the first HLLB path onto the HLLB test signal, one is faced with design constraints given by the fact that the same coupler also direct OTDR signal to the incoming fiber. In addition, the Applicant has realized that increasing the optical power of the HLLB test signal in the third HLLB path may give raise to a resonant optical cavity effect, wherein the two identical filters along respectively the second and the first HLLB path realize the optical cavity for the HLLB test signal. Moreover, the Applicant notes that the proposed architecture does not allow to monitor simultaneously from the two ends of the link.

It is an aim of the present invention to provide an optical amplification stage adapted for OTDR monitoring, as well as a related system and method for ODTR monitoring, which allows monitoring the status of operation of optical amplifiers along an amplified optical communication link (in particular the output optical power of the amplifiers) while in presence of the data-carrying WDM signal along the link under test (in-service monitoring), with a simple and effective architecture of the amplification stage which introduces negligible or no interference on the WDM signal.

In one aspect the present invention relates to an optical amplification stage for OTDR monitoring, the stage comprising a first and a second optical signal path having respectively first and second direction of propagation of a respective first and second optical signal, the first and second direction of propagation being mutually opposite, and a first and a second optical amplifier located along the first and second optical signal path respectively and having an optical amplification band.

In an aspect each of the first and second optical signal is a WDM signal comprising a plurality of optical signal channels having center wavelengths distributed on a grid equally spaced in frequency by a WDM spacing, the WDM signal occupying a WDM band comprised within the amplification band. Preferably the WDM signal does not occupy the whole amplification band, and some of the frequencies in the amplification band and on the grid are allocated for the OTDR signals. Preferably, the width of the WDM band is greater than or equal to 15nm, more preferably greater than or equal to 20 nm, e.g. 30 nm. Preferably, the width of the amplification band is greater than or equal to 20nm, more preferably greater than or equal to 25 nm, e.g. 36 nm. Preferably the WDM band and/or the amplification band is comprised in the infrared band from 1500 nm to 1620 nm, more preferably from 1510 nm to 1580 nm, still more preferably from 1520 nm to 1565 nm. Preferably the WDM spacing is less than or equal to 200 GHz, more preferably less than or equal to 150 GHZ, for example 100 GHz or 50 GHz.

In an aspect the optical amplification stage comprises a first optical coupler placed along the first optical signal path downstream the first optical amplifier with respect to the first direction of propagation, a second optical coupler placed along the second optical signal path downstream the second optical amplifier with respect to the second direction of propagation and an optical by-pass path optically connecting the first and the second optical coupler. Conventionally each coupler has a first and second signal port belonging to the respective optical signal path, the first port facing the respective amplifier, and a first and second by-pass port, the first by-pass port belonging to the optical by-pass path, wherein the first by-pass port is the cross-port with respect to the second signal port. Preferably the optical couplers are directional optical couplers each one formed by a pair of optical fiber segments closely spaced together.

In an aspect, the ratio of the optical power inputting each port of each coupler to the optical power outputting the respective cross port (e.g. from first signal port to second by-pass port) is greater than or equal to 10 dB, preferably greater than or equal to 12 dB, and/or less than or equal to 16 dB, preferably less than or equal to 14 dB, e.g.. 13 dB (95/5 power splitting ratio).

In an aspect, the ratio of the optical power inputting each port of each coupler to the optical power outputting the respective thru-port (e.g. from first signal port to second signal port) is greater than 0 dB and/or less than 1 dB, preferably less than or equal to 0.5 dB, e.g.. 0.2 dB (95/5 power splitting ratio).

In an aspect the optical power response of the first and second optical coupler is substantially constant (e.g. less than 1 dB variation) over the whole WDM band, typically over the whole amplification band.

In an aspect a first total loss undertaken by an optical radiation in the whole WDM band, typically in the whole amplification band, propagating from the second signal port of the first (respectively second) optical coupler to the second signal port of the second (respectively first) optical coupler through the by-pass path is greater than 20 dB, preferably greater than or equal to 25 dB, more preferably greater than or equal to 30 dB, and/or less than or equal to 40 dB, preferably less than or equal to 35 dB. It is to be noted that typically the first total loss is substantially constant (e.g. less than 1 dB variation) along the whole WDM band, more typically along the whole amplification band.

In an aspect, the optical by-pass path comprises an optical attenuator (e.g. an attenuating fiber) having a substantially constant attenuation over the entire WDM band, typically the entire amplification band. Preferably the attenuation of the optical attenuator is less than or equal to 10dB (in power), more preferably less than or equal to 8 dB, and/or greater than or equal to 3 dB, for example 6 dB.

In an aspect the optical amplification stage comprises a first and a second optical reflector optically connected to the second by-pass port of respectively the first and second optical coupler. Preferably the first and second reflector are placed along a respective optical fiber connected, preferably directly, i.e. without intervening couplers and/or other optical devices, to the second by-pass port of the respective optical coupler.

In an aspect each of the first and second optical reflector is a Bragg Grating reflector.

In an aspect the first and second optical reflectors are each a localized reflector. The term 'localized' differentiate the optical reflectors from the line optical fiber or any other continuously distributed back-reflector, which also back-reflects (or back-scatters) an optical radiation but in a continuous and distributed manner. Contrary to the localized reflectors, backscattering is not wavelength selective in the meaning below, in that it is only slowly dependent on wavelength.

In an aspect, the first and second reflector are structured for reflecting respectively in a first and second reflection band comprising respectively a first and a second OTDR wavelength comprised within the amplification band.

Preferably the first and second reflection band do not comprise respectively the second and the first OTDR wavelength (i.e. the first and second optical reflectors are structured so that the optical power ratio of the optical radiation reflected by the optical reflector to the radiation incident thereto at respectively the second and first OTDR wavelength is less than -25 dB, preferably less than or equal to -30 dB). In this way it is avoided the creation of an unwanted optical resonant cavity between the two optical reflectors connected by the optical by-pass path. Preferably the first and second OTDR wavelengths are on the grid and/or do not overlap with the WDM signal, more preferably they are outside the WDM band, preferably at the opposite sides of the WDM band. Preferably the distance of each of the first and second OTDR wavelength from the nearest edge of the WDM band is greater than or equal to 0.5 nm, more preferably greater than or equal to 1 nm, e.g. 2 nm.

In an aspect the distance among the first and second OTDR wavelength is at least 200 GHz, preferably at least 1000 GHz.

In an aspect, the first and second optical reflectors are structured so that the optical power ratio of the optical radiation reflected by each optical reflector to the radiation incident thereto throughout the whole WDM band is less than -25 dB, preferably less than or equal to -30 dB.

In an aspect, the first and second optical reflectors are structured for letting go through all the WDM signal channels substantially unaltered (e.g. with a loss less than 1 dB, preferably less than 0.5 dB, for example 0.1 dB).

In an aspect, the first and second optical reflectors are structured so that the optical power ratio of the optical radiation reflected by each optical reflector to the radiation incident thereto at the respective first and second OTDR wavelength is greater than or equal to -10 dB, preferably greater than or equal to -8 dB, and/or less than or equal to 0 dB, for example -1 dB.

In an aspect a second total loss undertaken by an optical radiation at the first and second OTDR wavelengths propagating from the first signal port of the first, respectively the second, optical coupler to the first, respectively the second, optical reflector and then to the second signal port of the second, respectively the first, optical coupler through the by-pass path is greater than 20 dB, preferably greater than or equal to 25 dB, more preferably greater than or equal to 30 dB and/or less than or equal to 40 dB. It is noted that the second total loss in the WDM band is greater than 60 dB.

In an aspect the difference (in dB) of the second total loss to the first total loss at the first and second OTDR wavelengths is less than 10 dB, preferably less than or equal to 8 dB, more preferably less than or equal to 5 dB, still more preferably less than or equal to 3 dB, for example about 1.2 dB. According to the Applicant this provides sufficient dynamic range to the OTDR signals reflected back by the optical reflectors even in presence of low power of the incident OTDR signals (thus allowing in-service monitoring of the amplifier performance) and even in presence of a sufficient loss of the by-pass on the back-scattered WDM signal. It is noted that the second total loss is never less than the first one.

In an aspect, a first and a second photodetector are optically connected to respectively the first and second optical reflector at the opposite side thereof with respect to the first and second optical coupler, respectively. Preferably the photodetectors are configured for detecting the optical power of the WDM signal outputting the respective optical amplifier.

In an aspect, the present invention relates to a system for OTDR monitoring an (bi-directional) optical communication link, the system comprising:
- the (bi-directional) optical communication link comprising a plurality of the optical amplification stages according to any aspect of the present invention optically connected in cascade by a plurality of first and second optical fiber spans interleaved respectively with said first and second optical signal paths of the plurality of optical amplification stages, the first optical fiber spans and the first optical signal paths forming together a first optical line, comprised within the (bi-directional) optical communication link, having the first direction of propagation and the second optical fiber spans and the second optical signal paths forming together a second optical line, comprised within the (bi-directional) optical communication link, having the second direction of propagation, the first and second optical line spanning together side-by-side;
- a first OTDR apparatus placed at a first end of the (bi-directional) optical communication link and optically coupled to the first and second optical line, the first OTDR apparatus being structured for generating and launching a first OTDR signal having the first ODTR wavelength into the first optical line with the first direction of propagation; for detecting and processing a first OTDR back-reflected signal coming from the second optical line with the second direction of propagation, the first OTDR back-reflected signal being generated from the first OTDR signal by the first optical reflector of at least one of, preferably all, the optical amplification stages, and for deriving from the detected first OTDR back-reflected signal information on the operation (preferably on the output power) of at least one of (preferably all) the first optical amplifiers along the first optical line.

In an aspect the system comprises a second OTDR apparatus placed at a second end of the (bi-directional) optical communication link, opposite said first end, and optically coupled to the first and second optical line, the second OTDR apparatus being structured for generating and launching a second OTDR signal having the second ODTR wavelength into the second optical line with the second direction of propagation; for detecting and processing a respective second OTDR back-reflected signal coming from the first optical line with the first direction of propagation, the second OTDR back-reflected signal being generated from the second OTDR signal by the second optical reflector of at least one of, preferably all, the optical amplification stages, and for deriving from the detected second OTDR back-reflected signal information on the operation (preferably on the output power) of at least one of (preferably all) the second optical amplifiers along the second optical line.

In an aspect, the first and/or second OTDR apparatus is/are also structured for generating and launching a third OTDR signal having a third ODTR wavelength, preferably coincident with a center wavelength of a WDM signal channel, into respectively the first and second optical line with the first and second direction of propagation; for detecting and processing a respective OTDR back-scattered trace coming from respectively the second and first optical line with the second and first direction of propagation, said OTDR back-scattered trace being generated by respectively the first and second optical line by distributed back-scattering of the third OTDR signal, and for deriving from the detected OTDR back-scattered trace information on the optical integrity of the first and/or second optical line.

In an aspect, each of the OTDR apparatus is structured for coherently detecting the respective OTDR back-reflected signal and/or the respective OTDR back-scattered trace.

In an aspect, the present invention relates to a WDM optical communication system comprising the above system for OTDR monitoring an (bi-directional) optical communication link and further comprising at the first and second end of the (bi-directional) optical communication link respectively a first and a second WDM transmitter structured for generating and sending into the first and second optical line with the first and second direction of propagation respectively, the respective WDM signal, and comprising at the second and first end respectively a first and a second WDM receiver structured for receiving and processing the respective WDM signal coming from respectively the first and second optical line.

In an aspect the WDM optical communication system comprises a plurality of the above system for OTDR monitoring a (bi-directional) optical communication link, the plurality of first and second optical fiber spans being enclosed in a single optical fiber cable spanning from one optical amplification stage to the next one.

In a further aspect, the present invention relates to a method for OTDR monitoring a (bi-directional) optical communication link comprising a plurality of the optical amplification stages according to any aspect of the present invention, optically connected in cascade by a plurality of first and second optical fiber spans interleaved respectively with said first and second optical signal paths of the plurality of optical amplification stages, the first optical fiber spans and the first optical signal paths forming together a first optical line within the (bi-directional) optical communication link having the first direction of propagation and the second optical fiber spans and the second optical signal paths forming together a second optical line having the second direction of propagation, the method comprising:
- at a first end of the optical communication link, generating a first OTDR signal having the first ODTR wavelength and launching it into the first optical line with the first direction of propagation;
- at at least one, preferably at each, optical amplification stage, generating a first OTDR back-reflected signal by back-reflecting at the respective first optical reflector a portion of the optical power of the first OTDR signal outputting the respective first optical amplifier with the first direction of propagation, and routing the first OTDR back-reflected signal into the respective second optical signal path downstream the respective second optical amplifier with respect to the second direction of propagation, with the second direction of propagation;
- at the first end of the optical communication link, detecting and processing the first OTDR back-reflected signal coming from the second optical line with the second direction of propagation and deriving from the detected first OTDR back-reflected signal information on the operation (preferably the output optical power) of the respective first optical amplifier(s) along the first optical line.

In an aspect the method comprises at a second end of the optical communication link, generating a second OTDR signal having the second ODTR wavelength and launching it into the second optical line with the second direction of propagation;
- at at least one, preferably at each optical amplification stage, generating a second OTDR back-reflected signal by back-reflecting at the respective second optical reflector a portion of the optical power of the second OTDR signal outputting the respective second optical amplifier with the second direction of propagation, and routing the second OTDR back-reflected signal into the respective first optical signal path downstream the respective first optical amplifier with respect to the first direction of propagation, with the first direction of propagation;
- at the second end of the optical communication link, detecting and processing the second OTDR back-reflected signal coming from the first optical line with the first direction of propagation and deriving from the detected second OTDR back-reflected signal information on the operation of the respective second optical amplifier(s) along the second optical line.

In an aspect, the first and/or second OTDR signal are launched in-service.

In an aspect, the method comprises at the first end and/or at the second end generating a third OTDR signal having the third ODTR wavelength and launching it into respectively the first and/or the second optical line with the first and/or second direction of propagation; detecting and processing the respective OTDR back-scattered trace coming from respectively the second and/or the first optical line with the second and/or first direction of propagation, said OTDR back-scattered trace being generated by respectively the first and second optical line by distributed back-scattering of the third OTDR signal, and deriving from the detected OTDR back-scattered trace information on the optical integrity of the first and/or second optical line.

In an aspect, the third OTDR signal is launched out-of-service(i.e. while WDM signal is not present in the first and/or second optical line).

In an aspect, the optical radiation back-scattered from the first and/or second OTDR signal by the in-line optical fibers along the first and/or second optical line is neglected and/or not processed.

In an aspect, the OTDR back-reflected signal(s) and/or the OTDR back-scattered trace are detected coherently.

Further aspects of the present invention are set forth in the appended claims.

Further characteristics and advantages will be more evident from the detailed description of some exemplary, though not exclusive, embodiments of optical amplification stage, related OTDR monitoring method and system, in accordance with the present invention. This description will be disclosed below with reference to the accompanying drawings, provided to a merely indicative and therefore non-limiting purpose, in which:
Fig. 1 shows in terms of logical blocks a schematic diagram of an embodiment of the optical amplification stage in accordance with the present invention;
Fig. 2 shows in terms of logical blocks a schematic diagram of an optical communication system comprising the amplification stages in accordance with the present invention;
Figs. 3A and 3B show (not to scale) an exemplar optical power response of respectively the first and second optical reflectors within the optical amplification stage of Fig.1.

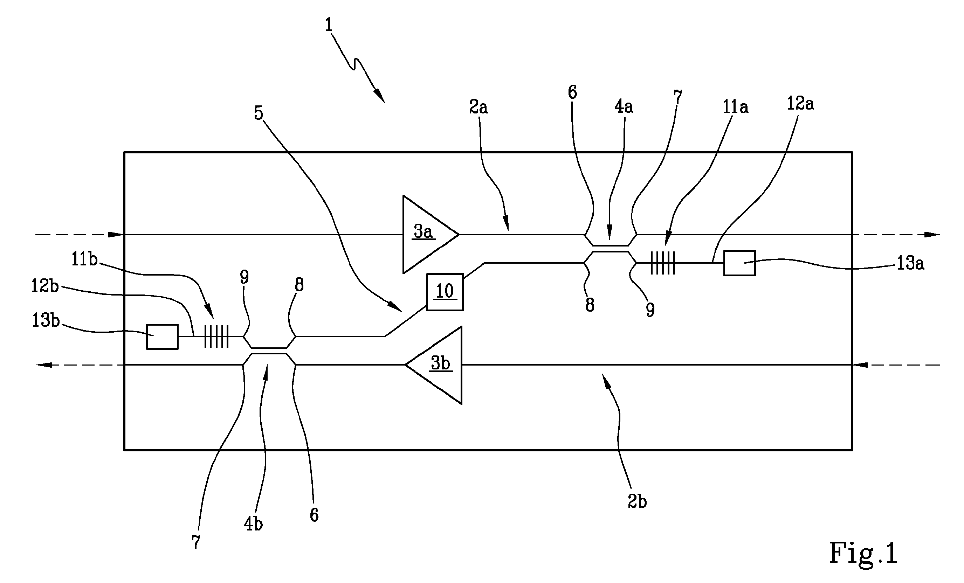

The optical amplification stage 1 for OTDR monitoring of the present invention comprises a first and a second optical signal path 2a, 2b (e.g. mainly composed of optical fibers) having respectively first and second direction of propagation (indicated by the dashed arrows in figure 1) of a respective first and second optical signal, the first and second direction of propagation being mutually opposite, and a first and a second optical amplifier 3a, 3b located along the first and second optical signal path respectively and having an optical amplification band, typically equal for the two amplifiers.

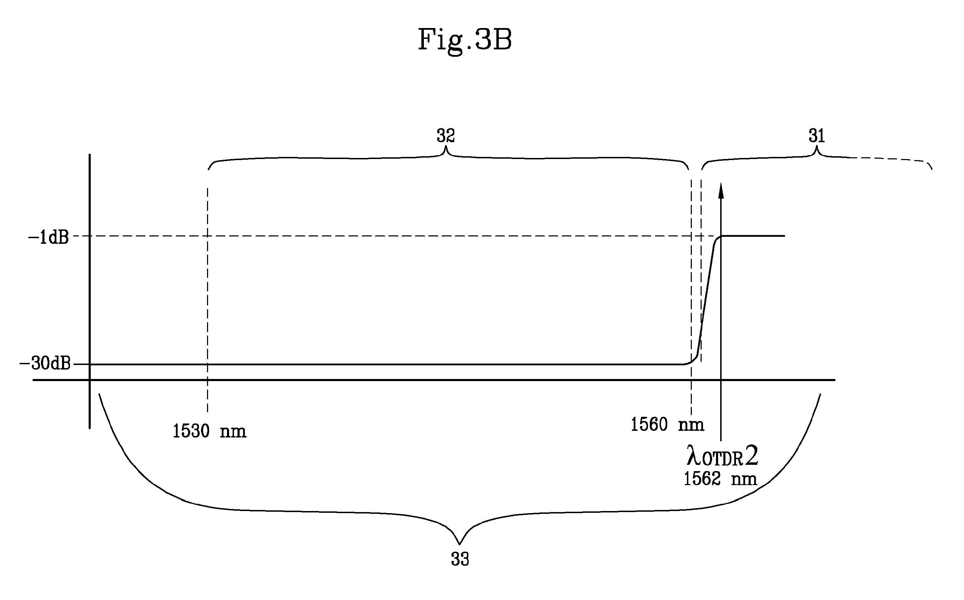

Typically each of the first and second optical signal is a WDM signal comprising a plurality of optical signal channels having center wavelengths distributed on a grid equally spaced in frequency by a WDM spacing (e.g. equal to 100 GHz or 50 GHz), the WDM signal occupying a WDM band comprised within the amplification band. Exemplarily, the width of the WDM band is about 30 nm, spanning from 1530 nm to 1560 nm, and the width of the amplification band is at least 36 nm, spanning at least from 1527 nm to 1563 nm (see e.g. fig.3A, 3B).

The optical amplification stage comprises a first optical coupler 4a placed along the first optical signal path 2a downstream the first optical amplifier 3a with respect to the first direction of propagation, a second optical coupler 4b placed along the second optical signal path 2b downstream the second optical amplifier 3b with respect to the second direction of propagation and an optical by-pass path 5 optically connecting the first and the second optical coupler. Conventionally each coupler has a first 6 and second signal port 7 belonging to the respective optical signal path, the first port facing the respective amplifier, and a first 8 and second by-pass port 9, the first by-pass port belonging to the optical by-pass path, wherein the first by-pass port 8 is the cross-port with respect to the second signal port 7. Preferably the optical couplers are directional optical couplers (such as those schematically depicted in figure 1) each one formed by a pair of optical fiber segments closely spaced together.

Exemplarily, the ratio of the optical power inputting each port of each coupler to the optical power outputting the respective cross port (e.g. from first signal port 6 to second by-pass port 9 or from second signal port 7 to first by-pass port 8) is 13 dB and the ratio of the optical power inputting each port of each coupler to the optical power outputting the respective thru-port (e.g. from first signal port 6 to second signal port 7 or from second by-pass port 9 to first by-pass port 8) is equal to 0.2 dB (95/5 power splitting ratio), throughout the whole amplification band. Exemplarily a first total loss undertaken by an optical radiation in the whole WDM band, typically in the whole amplification band, propagating from the second signal port 7 of the first (respectively second 4b) optical coupler 4a to the second signal port 7 of the second (respectively first 4a) optical coupler 4b through the by-pass path 5 is equal to about 32 dB.

Typically (e.g. in order to achieve the above first total loss), the optical by-pass path 5 comprises an optical attenuator 10 (e.g. an attenuating fiber) having a substantially constant attenuation over the entire WDM band, typically the entire amplification band, exemplarily equal to about 6 dB.

The optical amplification stage 1 comprises a first 11a and a second optical reflector 11b optically connected to the second by-pass port 9 of respectively the first 4a and second optical coupler 4b. Preferably the first and second reflector 11a, 11b are placed along a respective optical fiber 12a, 12b connected, preferably directly, i.e. without intervening couplers and/or other optical devices, to the second by-pass port 9 of the respective optical coupler.

Preferably each of the first and second optical reflector is a Bragg Grating reflector.

Figs. 3a and 3b show an exemplar optical power response of respectively the first and second optical reflector, in terms of the ratio of the optical power of the reflected radiation to the optical power of the corresponding incident radiation.

It can be seen that the first and second reflector are structured for reflecting only respectively in a first and second reflection band, 30 and 31 respectively, comprising respectively a first and a second OTDR wavelength, λOTDR1 and λOTDR2, e.g. respectively equal to 1528 nm and 1562 nm, and not comprising respectively the second and the first OTDR wavelength, the first and second OTDR wavelengths being in the amplification band 33 (depicted by way of illustration only in fig. 3B).

Exemplarily the first and second OTDR wavelengths are on the grid and outside the WDM band 32 (exemplarily spanning from 1530 nm to 1560 nm) at opposite sides thereof, being placed at about 2 nm from the nearest edge of the WDM band (i.e. either 1530 nm or 1560 nm).

Exemplarily, the optical power ratio of the optical radiation reflected by each optical reflector to the radiation incident thereto at the respective first and second OTDR wavelength is about -1 dB. It is noted that fig 3A and 3B show only one edge of the reflection bands 30, 31 (conventionally defined as the wavelength wherein the power response drops to below about -25 dB), which is the nearest one to the WDM band.

Exemplarily the optical power ratio of the optical radiation reflected by each optical reflector to the radiation incident thereto throughout the whole WDM band is equal to about -30 dB. Advantageously, the first and second optical reflectors are structured for letting go through (i.e. trespassing the optical reflectors) all the WDM signal channels substantially unaltered (e.g. with a loss of about 0.1 dB).

Exemplarily a second total loss undertaken by an optical radiation at the first and second OTDR wavelengths propagating from the first signal port 6 of the first 4a, respectively the second 4b, optical coupler to the first 11a, respectively the second 11b, optical reflector (via the second by-pass port 9) and then after reflection to the second signal port 7 of the second 4b, respectively the first 4a, optical coupler through the by-pass path 5 is equal to about 33.2 dB (13dB by each coupler crossing in-to-cross + 6 dB by the attenuating fibre +1 dB by the reflector + 0.2dB by the coupler in-to-thru), i.e. it is only 1.2 dB greater than the first total loss (which is the loss affecting the signal back-scattered from the WDM signal and propagating through the by-pass path 5).

Preferably, a first and a second photodetector 13a, 13b are optically connected to respectively the first and second optical reflector 11a, 11b at the opposite side thereof with respect to the first and second optical coupler 4a, 4b, respectively. Preferably the photodetectors are configured for detecting the optical power of the WDM signal outputting the respective optical amplifier, e.g. as known in the art.

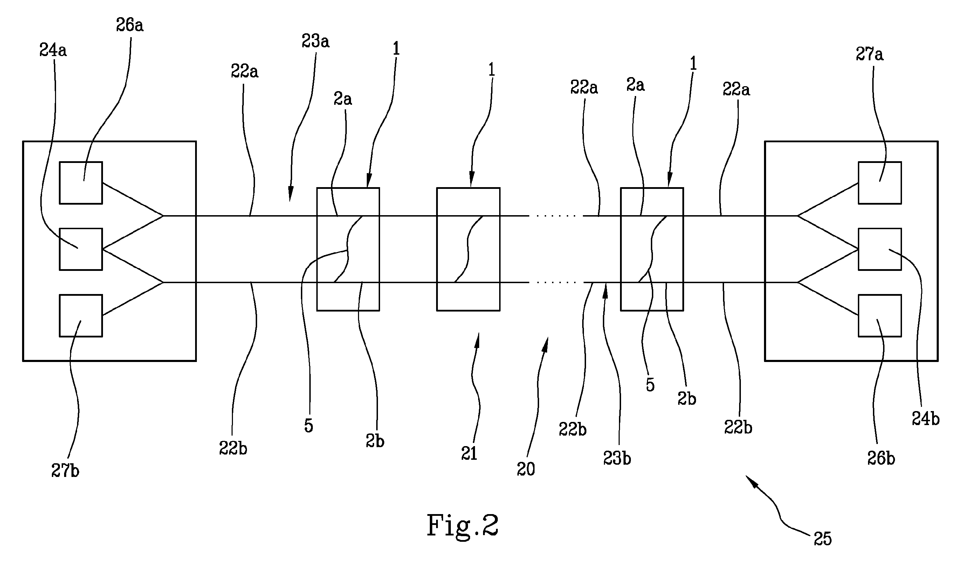

Fig. 2 exemplarily shows a system 20 for OTDR monitoring a bi-directional optical communication link 21, the system 20 comprising the bi-directional optical communication link 21 comprising a plurality of the optical amplification stages 1 (only partially depicted in fig.2) optically connected in cascade by a plurality of first and second optical fiber spans 22a, 22b interleaved respectively with said first and second optical signal paths 2a, 2b of the plurality of optical amplification stages, the first optical fiber spans and the first optical signal paths forming together a first optical line 23a, comprised within the bi-directional optical communication link, having the first direction of propagation and the second optical fiber spans and the second optical signal paths forming together a second optical line 23b, comprised within the bi-directional optical communication link, having the second direction of propagation, the first and second optical line 23a, 23b spanning together side-by-side.

The system 20 further comprises a first OTDR apparatus 24a placed at a first end (e.g. on the left in fig.2) of the bi-directional optical communication link and optically coupled to the first and second optical line, the first OTDR apparatus being structured for generating and launching a first OTDR signal having the first ODTR wavelength into the first optical line 23a with the first direction of propagation; for detecting and processing a first OTDR back-reflected signal coming from the second optical line 23b with the second direction of propagation, the first OTDR back-reflected signal being generated from the first OTDR signal by the first optical reflector 11a of at least one of, preferably all, the optical amplification stages 1, and for deriving from the detected first OTDR back-reflected signal information on the operation (preferably on the output power) of at least one of (preferably all) the first optical amplifiers 3a along the first optical line. Preferably the system further comprises a second OTDR apparatus 24b placed at a second end (e.g. on the right in fig.2) of the bi-directional optical communication link, opposite said first end, and optically coupled to the first and second optical line, the second OTDR apparatus being structured for generating and launching a second OTDR signal having the second ODTR wavelength into the second optical line with the second direction of propagation; for detecting and processing a respective second OTDR back-reflected signal coming from the first optical line with the first direction of propagation, the second OTDR back-reflected signal being generated from the second OTDR signal by the second optical reflector 11b of at least one of, preferably all, the optical amplification stages 1, and for deriving from the detected second OTDR back-reflected signal information on the operation (preferably on the output power) of at least one of (preferably all) the second optical amplifiers along the second optical line. Preferably, the first and second OTDR apparatus are also structured for generating and launching a third OTDR signal having a third ODTR wavelength, preferably coincident with a center wavelength of a WDM signal channel, into respectively the first and second optical line with the first and second direction of propagation; for detecting and processing a respective OTDR back-scattered trace coming from respectively the second and first optical line with the second and first direction of propagation, said OTDR back-scattered trace being generated by respectively the first and second optical line by distributed back-scattering of the third OTDR signal, respectively, and for deriving from the detected OTDR back-scattered trace information on the optical integrity of the first and/or second optical line.

Preferably, each of the OTDR apparatus is structured for coherently detecting the respective OTDR back-reflected signal and/or the respective OTDR back-scattered trace.

Fig 2 schematically shows also a WDM optical communication system 25 comprising the system 20 for OTDR monitoring the bi-directional optical communication link and further comprising at the first and second end of the bi-directional optical communication link respectively a first 26a and a second WDM transmitter 26b structured for generating and sending into the first and second optical line with the first and second direction of propagation respectively, the respective WDM signal, and comprising at the second and first end respectively a first 27a and a second WDM receiver 27b structured for receiving and processing the respective WDM signal coming from respectively the first and second optical line.

Preferably the WDM optical communication system 25 comprises a plurality (not shown) of the above systems 20 for OTDR monitoring a bi-directional optical communication link, the plurality of first and second optical fiber spans being enclosed in a single optical fiber cable (not shown) spanning from one optical amplification stage to the next one.

An exemplary method for OTDR monitoring the bi-directional optical communication link 21 based on the above system 20 will be described here below.

The method comprises at the first end of the optical communication link, generating a first OTDR signal having the first ODTR wavelength and launching it (preferably in-service) into the first optical line 23a with the first direction of propagation.

Subsequently, at at least one, preferably at each, optical amplification stage 1, the method comprises generating a first OTDR back-reflected signal by back-reflecting at the respective first optical reflector 11a a portion of the optical power of the first OTDR signal outputting the respective first optical amplifier 3a with the first direction of propagation, and routing the first OTDR back-reflected signal into the second optical signal path 2b downstream the second optical amplifier with respect to the second direction of propagation, with the second direction of propagation.

Still subsequently, the method further comprises at the first end of the optical communication link, detecting (preferably coherently) and processing the first OTDR back-reflected signal coming from the second optical line 23b with the second direction of propagation and deriving from the detected first OTDR back-reflected signal information on the operation (preferably the output optical power) of the respective first optical amplifier(s) along the first optical line. Preferably, the method comprises at the second end of the optical communication link, generating a second OTDR signal having the second ODTR wavelength and launching it (preferably in-service) into the second optical line 23b with the second direction of propagation; at each optical amplification stage, generating a second OTDR back-reflected signal by back-reflecting at the respective second optical reflector 11b a portion of the optical power of the second OTDR signal outputting the respective second optical amplifier 3b with the second direction of propagation, and routing the second OTDR back-reflected signal into the respective first optical signal path 2a downstream the respective first optical amplifier 3a with respect to the first direction of propagation, with the first direction of propagation; at the second end of the optical communication link, detecting (preferably coherently) and processing the second OTDR back-reflected signal coming from the first optical line 23a with the first direction of propagation and deriving from the detected second OTDR back-reflected signal information on the operation of the respective second optical amplifier(s) along the second optical line.

Preferably, the method comprises at the first end and/or at the second end generating a third OTDR signal having the third ODTR wavelength and launching it (preferably out-of-service) into respectively the first and/or the second optical line with the first and/or second direction of propagation; detecting (preferably coherently) and processing the respective OTDR back-scattered trace coming from respectively the second and/or the first optical line with the second and/or first direction of propagation and deriving from the detected OTDR back-scattered trace information on the optical integrity of the first and/or second optical line.

Preferably, the optical radiation back-scattered from the first and/or second OTDR signal by the in-line optical fibers along the first and/or second optical line is neglected and/or not processed.

The amplifiers 3a, 3b can be implemented with conventional technology, such as erbium doped fiber amplifiers (EDFAs) or other rare earth doped fiber amplifiers, Raman amplifiers or semiconductor optical amplifiers. In addition, they can be based on single-stage architecture as well as dual-stage architecture (here the term 'stage' has a different meaning from that used above and in the claims). For purposes of simplicity, the amplifiers depicted in figure 2 have been abstracted. In practice, the amplifiers can be implemented as typically done using, for example, an erbium doped fiber and laser pump configuration. In addition and with reference to dual-stage architectures, other componentry that operatively couple amplifiers, such as noise filtering (e.g., ASE filter), isolators, and gain flattening filters, are not shown, but can be implemented as typically done. It is to be noted that the "output" of an amplifier generally refers to the output of the amplifier itself for single-stage embodiments, or the output of the second stage amplifier for dual-stage embodiments. Likewise, the "input" of an amplifier generally refers to the input of the amplifier itself for single-stage embodiments, or the input of the first stage amplifier for dual-stage embodiments.

In addition, the term "optically connected" as used herein refers to any connection, coupling, link or the like by which optical signals carried by one system element are imparted to the "connected" element or elements. Unless otherwise stated, such "connected" devices are not necessarily directly connected to one another and may be separated by intermediate components or devices that may manipulate or modify such signals.

## Claims

1. Optical amplification stage (1) for OTDR monitoring, the stage comprising a first (2a) and a second optical signal path (2b) having respectively first and second direction of propagation of a respective first and second optical signal, the first and second direction of propagation being mutually opposite, a first (3a) and a second optical amplifier (3b) located along the first and second optical signal path respectively and having an optical amplification band, each of the first and second optical signal being a WDM signal occupying a WDM band comprised within the optical amplification band, a first optical coupler (4a) placed along the first optical signal path downstream the first optical amplifier with respect to the first direction of propagation, a second optical coupler (4b) placed along the second optical signal path downstream the second optical amplifier with respect to the second direction of propagation and an optical by-pass path (5) optically connecting the first and the second optical coupler, each coupler having a first (6) and a second signal port (7) belonging to the respective optical signal path, the first port facing the respective optical amplifier, and a first (8) and second by-pass port (9), the first by-pass port belonging to the optical by-pass path, wherein the first by-pass port is the cross-port with respect to the second signal port,
the optical amplification stage comprising a first (11a) and a second optical reflector (11b) optically connected to the second by-pass port of respectively the first and second optical coupler, the first and second reflector being structured for reflecting respectively in a first (30) and second reflection band (31) comprising respectively a first and a second OTDR wavelength comprised within the amplification band, the first and second optical reflectors being structured so that the optical power ratio of the optical radiation reflected by each optical reflector to the radiation incident thereto throughout the whole WDM band is less than -25 dB, and so that the optical power ratio of the optical radiation reflected by each optical reflector to the radiation incident thereto at the respective first and second OTDR wavelength is greater than or equal to - 10 dB,
wherein a first total loss is defined as the loss undertaken by an optical radiation propagating from the second signal port of the first, respectively the second, optical coupler to the second signal port of the second, respectively the first, optical coupler through the by-pass path and wherein a second total loss is defined as the loss undertaken by an optical radiation propagating from the first signal port of the first, respectively the second, optical coupler to the first, respectively the second, optical reflector and then to the second signal port of the second, respectively the first, optical coupler through the by-pass path, and
wherein the difference of the second total loss to the first total loss at the first and second OTDR wavelengths is less than 10 dB.

2. The optical amplification stage (1) according to claim 1, wherein the first total loss in the whole amplification band is greater than or equal to 25 dB.

3. The optical amplification stage (1) according to claim 1 or 2, wherein the optical by-pass path comprises an optical attenuator (10) having a substantially constant attenuation over the entire amplification band which is greater than or equal to 3 dB.

4. The optical amplification stage (1) according to any one of the preceding claims, wherein the first and second optical reflectors are structured so that the optical power ratio of the optical radiation reflected by each optical reflector to the radiation incident thereto throughout the whole WDM band is less than or equal to -25 dB.

5. The optical amplification stage (1) according to any one of the preceding claims, wherein the first and second optical reflectors (11a, 11b) are structured so that the optical power ratio of the optical radiation reflected by each optical reflector to the radiation incident thereto at respectively the first and second OTDR wavelength is greater than or equal to -8 dB, preferably greater than or equal to -3 dB.

6. The optical amplification stage (1) according to any one of the preceding claims, wherein the second total loss at the first and second OTDR wavelengths is greater than 20 dB and less than or equal to 40 dB.

7. The optical amplification stage (1) according to any one of the preceding claims, wherein each of the first and second optical reflector is a Bragg Grating reflector.

8. The optical amplification stage (1) according to any one of the preceding claims, wherein the first and second reflector (11a, 11b) are placed along a respective optical fiber connected directly to the second by-pass port (9) of the respective optical coupler (4a, 4b).

9. The optical amplification stage (1) according to any one of the preceding claims, further comprising a first and a second photodetector (13a, 13b) optically connected to respectively the first and second optical reflector at the opposite side thereof with respect to the first and second optical coupler, respectively, the photodetectors being configured for detecting the optical power of the WDM signal outputting the respective optical amplifier.

10. The optical amplification stage (1) according to any one of the preceding claims, wherein the first and second reflection band do not comprise respectively the second and the first OTDR wavelength.

11. System (20) for OTDR monitoring an optical communication link, the system comprising:
- the optical communication link (21) comprising a plurality of the optical amplification stages each one according to any one of the preceding claims, the optical amplification stages being optically connected in cascade by a plurality of first and second optical fiber spans (22a, 22b) interleaved respectively with said first and second optical signal paths (2a, 2b) of the plurality of optical amplification stages, the first optical fiber spans and the first optical signal paths forming together a first optical line (23a), comprised within the optical communication link, having the first direction of propagation and the second optical fiber spans and the second optical signal paths forming together a second optical line (23b), comprised within the optical communication link, having the second direction of propagation, the first and second optical line spanning together side-by-side;
- a first OTDR apparatus (24a) placed at a first end of the optical communication link and optically coupled to the first and second optical line, the first OTDR apparatus being structured for generating and launching a first OTDR signal having a first ODTR wavelength into the first optical line with the first direction of propagation; for detecting and processing a first OTDR back-reflected signal coming from the second optical line with the second direction of propagation, the first OTDR back-reflected signal being generated from the first OTDR signal by the first optical reflector of at least one of, preferably all, the optical amplification stages, and for deriving from the detected first OTDR back-reflected signal information on the operation of at least one of, preferably all, the first optical amplifiers along the first optical line.

12. A WDM optical communication system (25) comprising the system for OTDR monitoring an optical communication link according to the preceding claim, and further comprising at the first and second end of the optical communication link respectively a first and a second WDM transmitter (26a, 26b) structured for generating and sending into the first and second optical line with the first and second direction of propagation respectively, the respective WDM signal, and comprising at the second and first end respectively a first and a second WDM receiver (27a, 27b) structured for receiving and processing the respective WDM signal coming from respectively the first and second optical line.

13. A method for OTDR monitoring an optical communication link comprising a plurality of the optical amplification stages (1) each one according to any one of claims 1 to 10, the optical amplification stages being optically connected in cascade by a plurality of first and second optical fiber spans (22a, 22b) interleaved respectively with said first and second optical signal paths (2a, 2b) of the plurality of optical amplification stages, the first optical fiber spans and the first optical signal paths forming together a first optical line (23a) within the optical communication link having the first direction of propagation and the second optical fiber spans and the second optical signal paths forming together a second optical line (23b) having the second direction of propagation, the method comprising:
- at a first end of the optical communication link, generating a first OTDR signal having a first ODTR wavelength and launching it into the first optical line with the first direction of propagation;
- at at least one, preferably at each, optical amplification stage (1), generating a first OTDR back-reflected signal by back-reflecting at the respective first optical reflector (11a) a portion of the optical power of the first OTDR signal outputting the respective first optical amplifier (3a) with the first direction of propagation, and routing the first OTDR back-reflected signal into the respective second optical signal path (2b) downstream the respective second optical amplifier (3b) with respect to the second direction of propagation, with the second direction of propagation;
- at the first end of the optical communication link, detecting and processing the first OTDR back-reflected signal coming from the second optical line with the second direction of propagation and deriving from the detected first OTDR back-reflected signal information on the operation of the respective first optical amplifier, preferably first optical amplifiers, along the first optical line.

14. The method according to claim 13, comprising at a second end of the optical communication link, generating a second OTDR signal having a second ODTR wavelength and launching it into the second optical line with the second direction of propagation;
- at at least one, preferably at each optical amplification stage (1), generating a second OTDR back-reflected signal by back-reflecting at the respective second optical reflector (11b) a portion of the optical power of the second OTDR signal outputting the respective second optical amplifier (3b) with the second direction of propagation, and routing the second OTDR back-reflected signal into the respective first optical signal path (2a) downstream the respective first optical amplifier (3a) with respect to the first direction of propagation, with the first direction of propagation;
- at the second end of the optical communication link, detecting and processing the second OTDR back-reflected signal coming from the first optical line with the first direction of propagation and deriving from the detected second OTDR back-reflected signal information on the operation of the respective second optical amplifier (3b) along the second optical line, the first and second OTDR wavelengths being mutually placed apart by at least 200 GHz.

15. The method according to claim 14, comprising at the first end and/or at the second end generating a third OTDR signal having a third ODTR wavelength and launching it into respectively the first and/or the second optical line with the first and/or second direction of propagation; detecting and processing the respective OTDR back-scattered trace coming from respectively the second and/or the first optical line with the second and/or first direction of propagation, said OTDR back-scattered trace being generated by respectively the first and second optical line by distributed back-scattering of the third OTDR signal, and deriving from the detected OTDR back-scattered trace information on the optical integrity of the first and/or second optical line.
